# EUROPEAN PATENT APPLICATION

(11) **EP 4 451 577 A1**
(43) Date of publication of application: **23.10.2024**
(21) Application number: 24170465.9
(22) Date of filing: 16.04.2024
(51) Int. Cl.: H04B 10/80, H04Q 11/00

(54) **OPTICAL INTERCONNECTION MODULES FOR HIGH RADIX SPINE-LEAF NETWORK SCALE-OUT**

(30) Priority: 20.04.2023 US 202363460641 P; 29.02.2024 US 202418591928
(71) Applicant: Panduit Corp., Tinley Park, Illinois 60487 (US)
(72) Inventor: Castro, Jose M., Naperville (US); Pimpinella, Richard J., Prairieville (US); Kose, Bulent, Burr Ridge (US); Huang, Yu, Orland Park (US)
(74) Representative: Roberts, Gwilym Vaughan

(57) **Abstract**

An optical interconnection assembly and method for the deployment and scaling of optical networks employing Spine-and-Leaf architecture has Spine multi-fiber optical connectors and Leaf multi-fiber optical connectors. The Spine optical connectors of the interconnection assembly are optically connected to multi-fiber connectors of Spine switches via Spine patch cords. The leaf multi-fiber connectors are optically connected to Leaf multi-fiber connectors of Leaf switches via Leaf patch cords. A plurality of fiber optic cables in said interconnection assembly serves to optically connect every Spine multi-fiber connector to every Leaf multi-fiber connector so that every Spine switch is optically connected to every Leaf switch. The optical interconnection assembly facilitates the deployment of network Spine-and-Leaf interconnections and the ability to scale out the network by using simplified methods described in this disclosure.

## Description

### CROSS-REFERENCE TO RELATED APPLICATION(S)

This application claims benefit to U.S. Provisional Patent Application No. 63/460,641, filed April 20, 2023, the entirety of which is hereby incorporated by reference herein.

### FIELD OF INVENTION

The present disclosure relates to folded Clos optical networks and in particular, an optical interconnection assembly and scale-out method for spine-and-leaf switching networks, for an arbitrarily even number of uplinks, providing significant flexibility improvement for deploying Spine-and-Leaf networks.

### BACKGROUND

Traditional three-tier switch architectures comprising Core, Aggregation, and Access (CAA) layers cannot provide the low latency channels required for East-West traffic. The Folded Clos network (FCN) using optical channels, overcome the limitations of the three-tier CAA networks. The FCN topology utilizes two types of switch nodes, Spine, and Leaf. Each Spine is connected to each Leaf. The network can scale horizontally to enable communication between a large number of servers while minimizing latency and non-uniformity by simply adding more Spine and Leaf switches.

This architecture has been proven to deliver high-bandwidth and low latency (a maximum of only two hops to reach the destination). However, for large numbers of switches, the Spine-Leaf architecture requires a complex mesh with large numbers of fibers and connectors, which increases the cost and complexity of the installation.

To understand the complexity, we define *Ml* as the number of ports used by the Leaf switches and *Nl* as the number of Leaf switches, *Ms* as the number of ports used by the Spine switches, and *Ns* as the number of Spine switches. Following the original definition of *FCN* [See Reference 1] and subsequent technical literature such as [See Reference 2], since all Spines transmit to all Leaf switches, *Ns x Ms* channels or lanes transmit data from Spine to Leaf, where *x* is the multiplication operator. For high-speed data communications, an optical communication channel is often comprised of multiple lanes, where the sum of individual lanes constitutes the aggregate data rate. Since all Leaf switches transmit to all Spine switches, it follows that *Nl x Ml* lanes transmit data from the Leaf switches and *Ns x Ms* lanes transmit from the Spine to Leaf Switches.

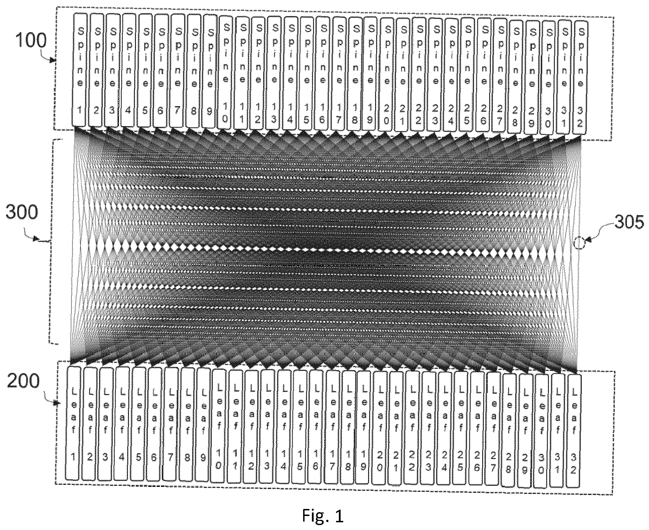

Fig. 1 shows an example of an FCN that connects *Ns* = *32* Spine switches, **100** to *Nl* = *32* Leaf switches, **200,** using fabric **300.** Each line in the fabric, e.g., **305** represents one duplex channel. This fabric **300** requires *Ns x Ms*= *Nl x Ml* =*1024* duplex interconnections (*Nlanes* = *2048* fibers). Note that the figure focuses on the fabric topology and does not indicate the actual physical location of the Spine and Leaf switches that should follow industry telecommunications infrastructure Standard TIA-942-A.

Traditionally mesh fabrics such as the ones shown in Fig. 1 have been implemented over patch panels using hundreds or thousands of patch cords connections to deploy the network topology. More recently, the use of transpose boxes as shown in the prior art can help to deploy those networks while reducing installation errors. Transposed boxes implement a section of the network mesh inside a box using multiple duplex fiber connections or optical flex circuits. The utilization of multi-fiber optical connector components with 4, 8,12, 16, or more fibers is advantageous since it increases port density. Using transpose boxes, as shown in the prior art, can help to reduce installation errors. However, the prior art cannot easily be adapted to different network topologies, switches radixes, or oversubscription levels.

A more recent prior art disclosed in Record Sketches 25024, 25512, 25595, 25664, and 25602, significantly facilitates the deployment of network Spine-and-Leaf interconnections and the ability to scale out the network by using simplified methods using uplinks in multiples of 4. However, those apparatuses and methods require additional external shuffles when used with two or six uplinks per Leaf switch.

In this application, we disclose novel mesh apparatuses and methods to facilitate modular and flexible deployment, of fabrics of different radices, and different sizes using an arbitrary number of "even" uplinks.

The disclosed apparatuses and methods also enable a simpler and better-organized interconnection mapping of different types of switches, to deploy and scale networks from a few tens to millions of servers.

### SUMMARY

An optical interconnection assembly and method for the deployment and scaling of optical networks employing Spine-and-Leaf architecture is disclosed. The optical interconnection assembly has Spine multi-fiber optical connectors and Leaf multi-fiber optical connectors. The Spine optical connectors of the interconnection assembly are optically connected to multi-fiber connectors of Spine switches via Spine patch cords. The leaf multi-fiber connectors are optically connected to Leaf multi-fiber connectors of Leaf switches via Leaf patch cords. A plurality of fiber optic cables in said interconnection assembly serves to optically connect every Spine multi-fiber connector to every Leaf multi-fiber connector so that every Spine switch is optically connected to every Leaf switch. The optical interconnection assembly facilitates the deployment of network Spine-and-Leaf interconnections and the ability to scale out the network by using simplified methods described in this disclosure.

### BRIEF DESCRIPTION OF THE DRAWINGS

Fig. 1 shows a two-level FCN with 32 spine fully connected to 32 leaf switches.
Fig. 2A shows a front of module **400.**
Fig. 2B shows a rear of module **400.**
Fig. 3 shows a top view of module **400.**
Fig. 4 shows a top view of module **400** showing mech M-001 interconnection arrangements.
Fig. 5 shows interconnection method of mesh M-001.
Fig. 6A shows interconnection properties of mesh M-001 and M-flex meshes.
Fig. 6B also shows interconnection properties of mesh M-001 and M-flex meshes.
Fig. 7 illustrates a simple method for implementing networks {*Ns*=*16, Nl*=*32, Upl*=*4*} using eight NIMs **400.**
Fig. 8 illustrates a simple method for implementing networks {*Ns*=*32*, *Nl*=*32, Upl*=*4*} using 16 NIMs **400.**
Fig. 9 illustrates a simple method for implementing networks {*Ns*=*8*, *Nl*=*32, Upl*=*2*} using 4 NIMs **400.**
Fig. 10 illustrates a simple method for implementing networks {*Ns=8*, *Nl*=*32*, *Upl*=*6*} using 12 NIMs **400.**
Fig. 11 illustrates a simple method for implementing networks {*Ns*=*24*, *Nl*=*16, Upl*=*6*} using 6 NIMs **400.**

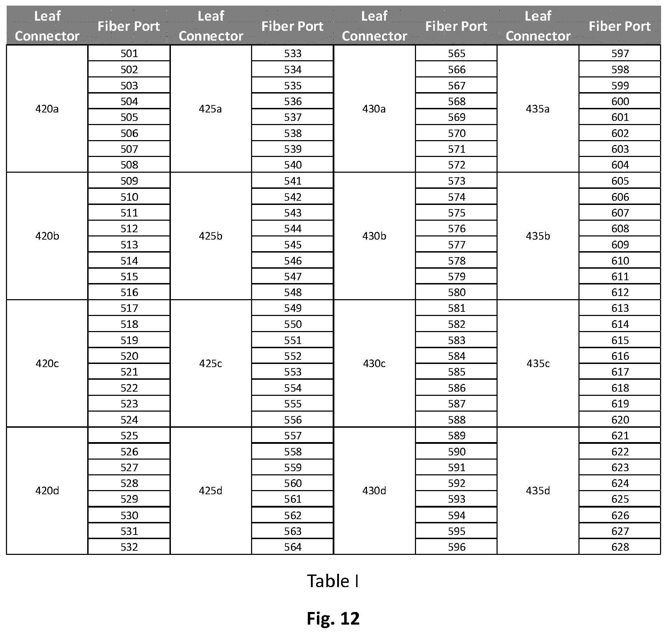

Fig. 12 is Table I, a map from Leaf connectors to individual ports.
Fig. 13 is Table 11, a map from Spine connectors to individual ports.
Fig. 14 is Table III, showing permutation function,*f(u)*=*V* used to construct meshes of mesh family M-FLEX.
Fig. 15 is Table IV, showing an interconnection map for eight meshes of mesh family M-FLEX.
Fig. 16 is Table V, showing an interconnection map for parallel connectors for M-0001.

### DESCRIPTION OF INVENTION

A modular apparatus and general method to deploy optical networks of a diversity of uplinks and radixes are disclosed in this document. The module and method can be used with standalone, stacked, or chassis based network switches, as long as the modular connections utilize MPO connectors (or other multi-fiber connectors) with four or more duplex fiber pairs. In particular, switches supporting Ethernet-specified SR or DR transceivers in their ports, having 40GBASE-SR4, 100GBASE-SR4, 200GBASE-SR4, or 400GBASE-DR4 designations, can use these modules without any change in connectivity. Networks with single-lane duplex transceivers (10G SR/LR, 25G SR/LR), 100GBASE-LR4, 400GBASE-LR4/FR4) will also work with these mesh modules, provided that correct TX/RX polarity is maintained in the mesh. Other types of transceivers, such as 400GBASE-FR4/LR4, can also be used by combining four transceiver ports with a harness or a breakout cassette.

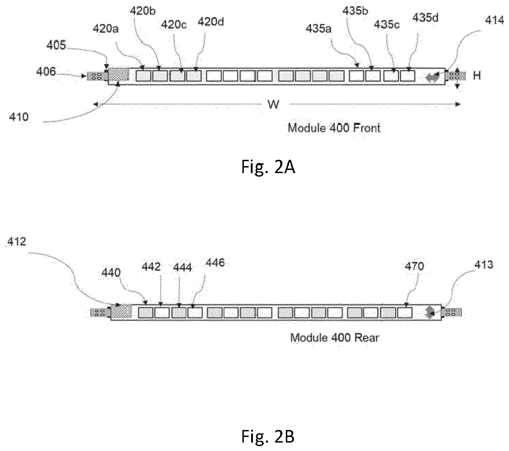

Fig. 2A shows a front view of the disclosed module 400, which is the key element in facilitating optical network deployment, reshaping, and scaling. In this embodiment, the module has 32 MPO connector ports that can be separated into the front and rear sections, as shown in Figs. 2A and 2B, or alternatively, the 32 ports can be located on one face of the device (not shown here).

The MPO or any other multi-fiber connector, SN-MT, MMC, can have eight or 12, or 16 fibers per ferrule. In this disclosure, we assume a multi-fiber connector with eight fibers, e.g., MPO-8. It is a straightforward exercise for a practitioner in the field to map the 8 fibers of an MPO-8 connector to the fibers of a connector with 12 or 16 fibers. For example, to map the fibers from MPO-8 to MPO-12 we can use the following index, {1 2 3 4,9,10,11,12}, which uses the eighth outers fibers of an MPO-12 and does not use the four center fibers.

For the sake of illustration, we assume that ports **420** to **435,** each with four MPO connectors, labeled a, b, c, and d, are located on the front side of the module, facing the Leaf switches, as shown in part (a) of the figure. On the opposite side of the module, ports **440** to **470,** each representing one MPO connector, face the Spine switches connections. The MPO dimensions allow a module width, W, in the range of 12 inches up to 19 inches, and the height, H, is in the range of 0.4 to 0.64 inches. The small width of the 16 MPO connectors relative to rack width (19 inches) provides enough space to place machine-readable labels, **410, 412,** and visual labels **414, 413,** which can help deploy or check the network interconnection as described later in this application. Also, lateral rails, **405,** on both sides of the module, would enable the modules to be inserted into a chassis structure if required. Alternatively, using brackets **406,** the modules can be directly attached to the rack. By using the specified height range for this embodiment, up to four modules can be stacked in 1 RU or less than 1.5 RU depending on density requirements.

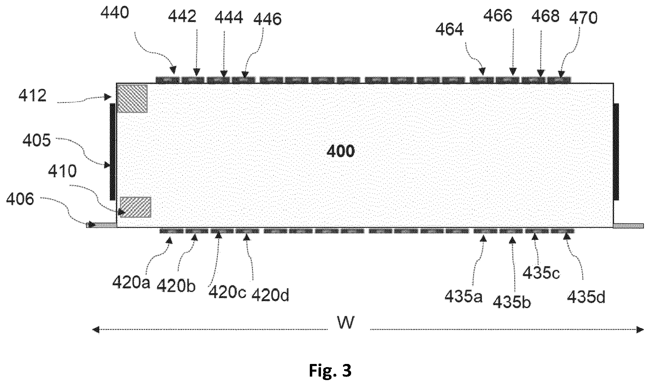

Fig. 3 shows a top view of the depicted module, showing additional machine-readable labels **410** and **412.** A laser scanner or a camera can read the labels. The read code can link to a database that has the interconnection maps of all modules in the network. The information can be displayed on a portable device, tablet, phone, or augmented reality lens to facilitate the deployment. See RSs 16563 and 25512 for more specific information on this.

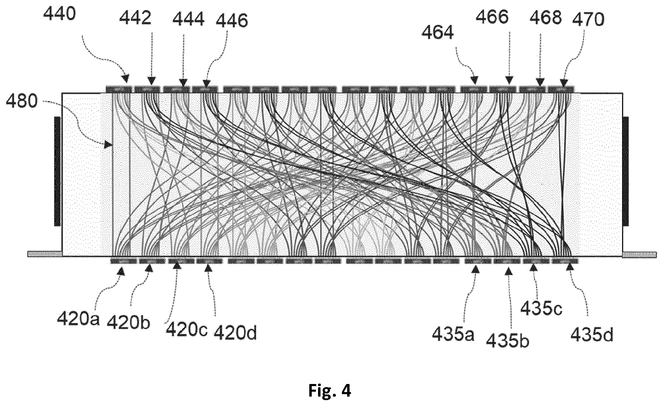

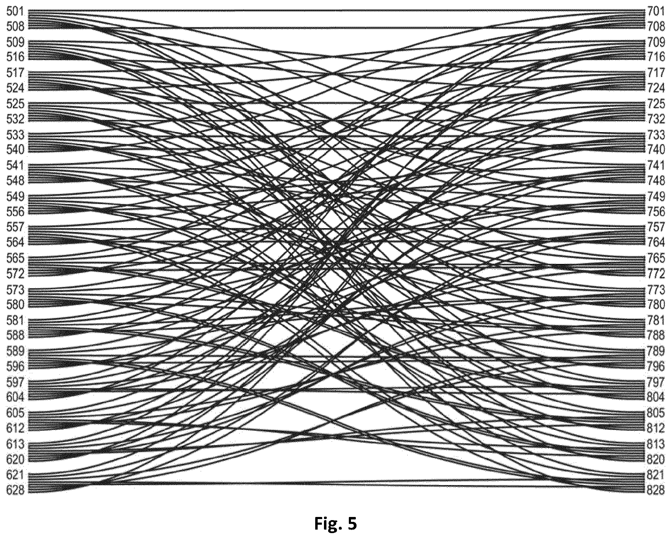

Fig. 4 shows a top view of the module with the internal interconnection scheme according to one mesh, **M-0001.** Fig. 5 shows a detailed view of the mesh **M-0001,** which belongs to a family of meshes, **M-FLEX** disclosed in this document. The **M-FLEX** meshes allow Spine and Leaf networks with variable numbers of uplinks, e.g., 2, 4, 6, 8,10, 12, or any even number. In Fig. 5 we follow the convention, where the individual ports that connect to the Leaf switches are labeled from **501** to **628,** and the individual ports that connect to the Spine switches are labeled from **701** to **828.** The individual ports should be understood as an individual optical waveguide or individual optical fiber.

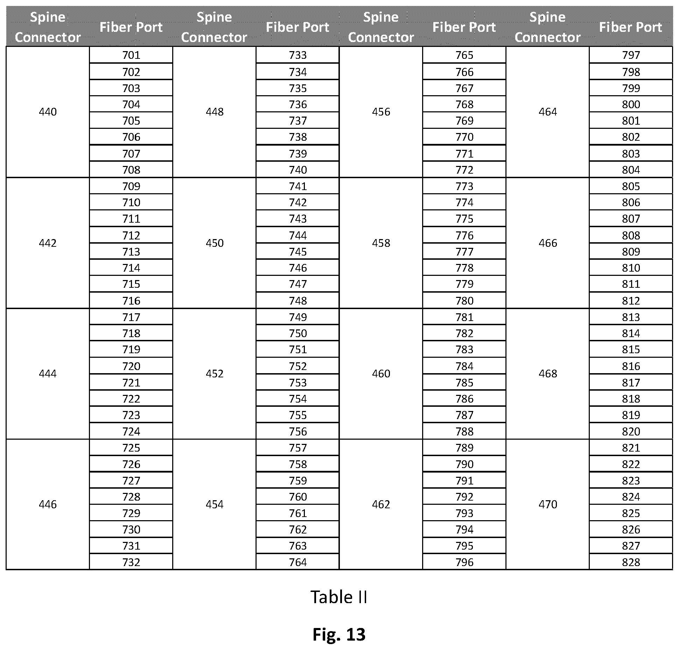

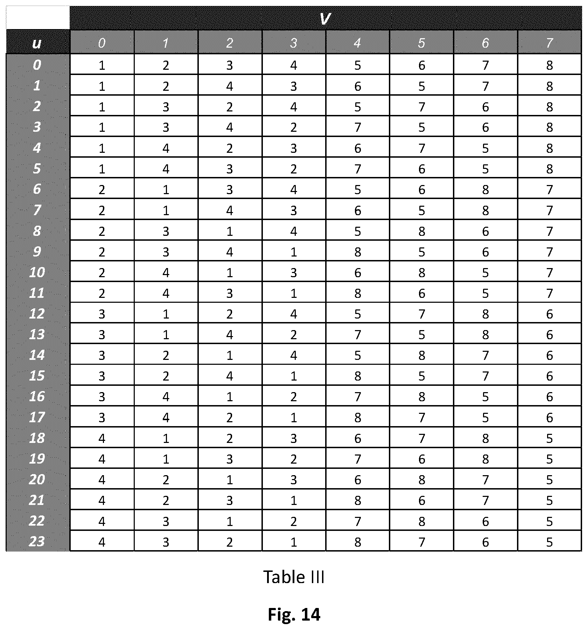

Table II (Fig. 13) shows the mapping from Leaf individual ports, {**501** to **628**} to Spine individual ports {**701** to **828**} for eight meshes from the mesh family **M-FLEX**. The family of meshes can be constructed by permutation of the ports using a permutation function *f(u)*=*V* where *uᵢ* is a scalar, a number from 0 to 23, *V* is an eight-element vector, *i* is the parallel connector in the range of *0* ≤ *i < Np,* where Np is the total number of parallel ports (*Np*=*16* in this disclosure). The output of the *function f(uᵢ)* is fully described in Table III (Fig. 14)

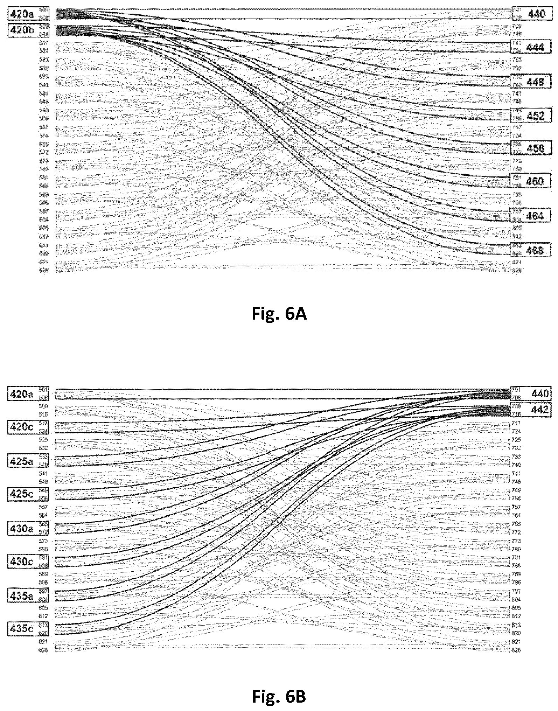

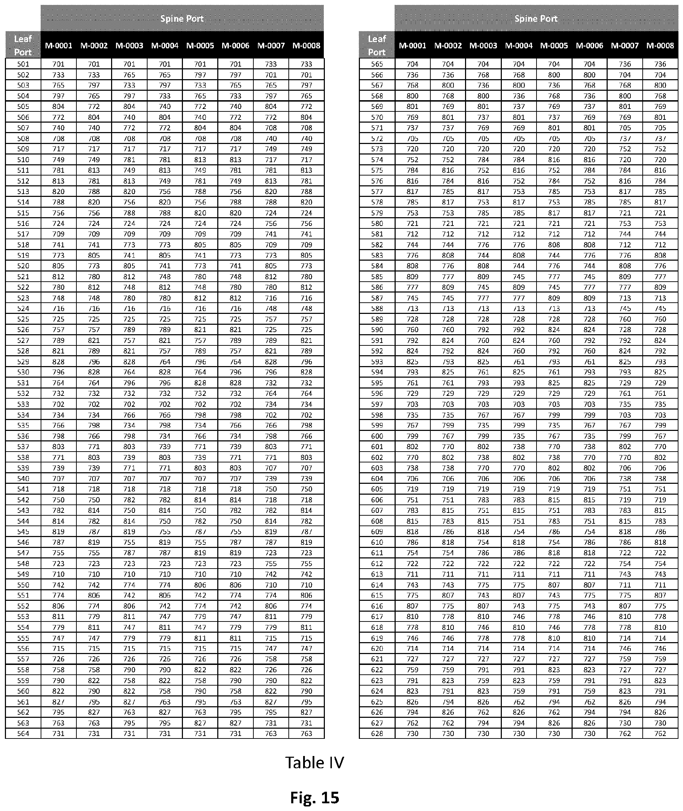

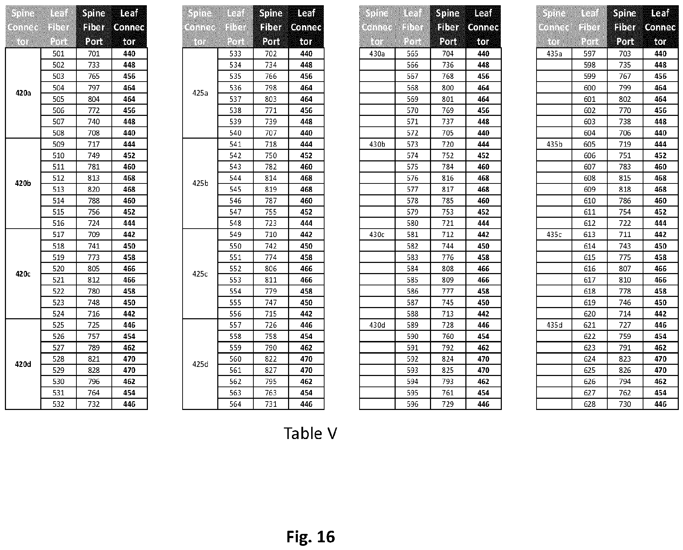

The meshes **M-FLEX**, e.g., **M-0001** shown in Figs. 4 and 5, are designed to connect parallel ports, of the Leaf side **420** to **435,** to parallel ports on the Spine side **440** to **470,** using an interpolation method described in Fig. 5 and Figs. 6A and 6B and tables IV (Fig. 15) and V (Fig. 16). The interconnection method maintains the correct polarity, to enable transmission from the laser transmitters to the optical receivers. The interpolation method shown in the mentioned figure and tables is essential for enabling a two-fiber connection from any adjacent parallel port from one side of the mesh to any adjacent parallel ports on the other side. Due to this characteristic of the disclosed mesh topology, **M-FLEX**, there is always a connection between any two adjacent ports located at the Leaf side of the mesh to any other two adjacent ports located at the Spine side.

To further illustrate this property, Figs. 6A and 6B, shows the connection of two adjacent parallel ports from the Leaf side to the Spine side. In Fig. 6A, the parallel port **420a** connects (using two fibers) to Spine ports **440, 448, 456,** and **464.** Port **420b,** which is adjacent to **420a,** connects (using two fibers) to Spine parallel ports **444, 452, 460,** and **468.** This interpolation method repeats for all other leaf ports, **420, 425, 430,** and **435.** Therefore, a Leaf switch that only has two parallel port uplinks can connect to eight Spines as will be illustrated in following examples.

Similarly, from the Spine side, the parallel port **440** connects (using two fibers) to Leaf parallel ports **420a, 425a, 430a,** and **435a.** The adjacent Spine parallel port **442** connects (using two fibers) to Leaf ports **420c, 425c, 430c,** and **435c.**

Table V (Fig. 15), illustrates the complete set of connections, using this interpolation method, among parallel and individual ports of the **M-0001.** This property, which enables at least one duplex connection from an arbitrary group of two adjacent parallel ports from one side of the mesh to any pair of adjacent parallel ports on the opposite side of the mesh is shared with all meshes in the **M-FLEX** set.

The mentioned properties enable the implementation of networks with as few as two duplex uplinks, which become important when creating meshes with an arbitrarily even number of uplinks as will be shown later in the document.

**M-0001** is only one of a large set of meshes, the mesh family **M-FLEX,** that have these properties. All the meshes of mesh family **M-FLEX** can be obtained from previously known meshes using a permutation method described as follows. First, we define a vectorial function *F(U)*=*[f(u₀), f(u₁), f(u₂),* ... , *f(u₁₅)],* where w is a vector or 16 elements given by *U***=***[u₀, u₁, u₂,* ... , *u₁₅*]. The function *F(U)* returns a vector of *8*×*Np*=*128* indices that can be used to permute a given mesh from the **M-FLEX** set to a new mesh that also belongs to the set.

Therefore, the mesh **M-0001** shown in Figs 4 and 5 is only one of a very large set of potential meshes that enables full connection from two adjacent parallel ports **420** to **435** from the Leaf side to at least one duplex lane (two individual ports) of any parallel ports of the Spine side **440** to **470.** The total number of meshes in **M-FLEX** is large, estimated as 24*^{Np}* = 1*e*22 (for *Np=16* ports). Table IV (Fig. 16) shows the interconnection map of eight meshes **M-0001** to **M-0008** from the set **M-FLEX.**

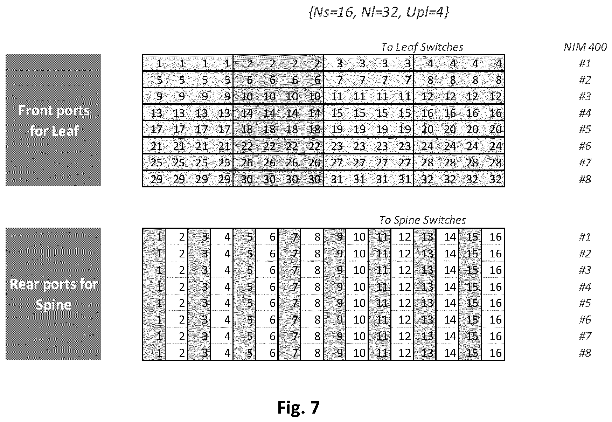

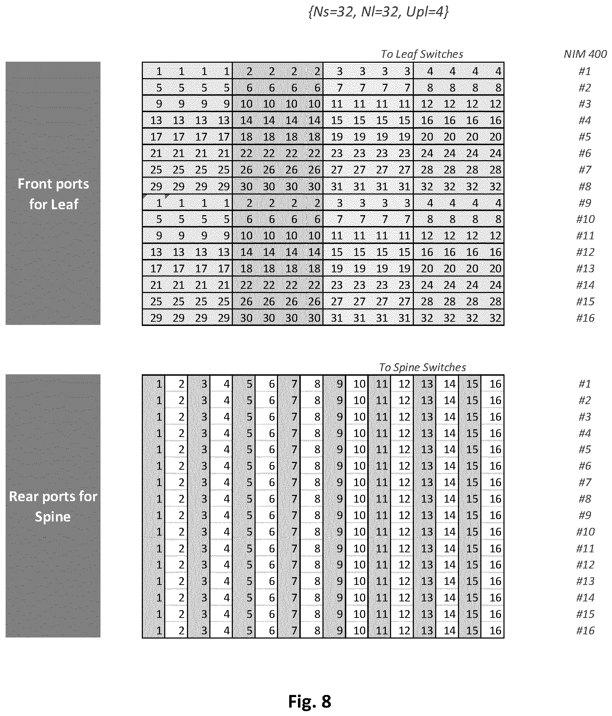

To demonstrate the compatibility of the M-FLEX mesh, e.g., **M-0001,** with the prior art described in Record Sketches 25595, 25602, and 25664 (which are optimized for Upl multiples of 4) the implementation of two fabrics {*Ns*=*16*, *Nl*=*32*, *Upl*=*4*}, and {*Ns*=*32*, *Nl*=*32, Upl*=*4*}, is illustrated in Fig. 7 and 8.

Fig. 7 illustrates the port numbering of a stack of eight NIM modules 400 needed to implement fabric {*Ns*=*16, Nl*=*32, Upl*=*4*}*.* A view from the front side of the stack shows the parallel ports of each NIM **400,** connect to the Leaf switches horizontally following a simple sequential order as shown in Fig. 6. The bottom illustration of the same figure shows a view from the rear side, where the Spines are connected vertically. Since three NIMs **400** modules can fit in ~1 RU, this implementation requires approximately 3 RUs.

In Fig. 8, a stack of 16 NIMs **400** modules are needed to implement fabric {*Ns*=*32*, *Nl*=*32*, *Upl*=*4*}. A view of the front side of the stack shows the parallel ports of each NIM **400,** which connect to the Leaf switches horizontally using the first four uplinks of each Leaf switch. Those uplinks connect to 16 Spines. To connect to the additional 16 splines the configuration is repeated. Therefore, the first and the last 8 NIMs **400** follow a similar configuration. The bottom side of the same figure shows a view from the rear side, showing that the Spines connect vertically. Since three NIMs **400** can fit in ~1 RU, this implementation requires approximately 6 RUs.

In the previous examples, it was shown that the NIMs **400** with **M-FLEX** meshes can be implemented in a simple way for fabrics with uplinks in multiples of 4 as in similar fabrics as the prior art NIMs disclosed in previous Record Sketches (25595, 25602, and 25664). However, the advantages of the mesh family **M-FLEX,** e.g., **M-0001** implemented inside the NIMs **400** provide more flexibility regarding the number of uplinks.

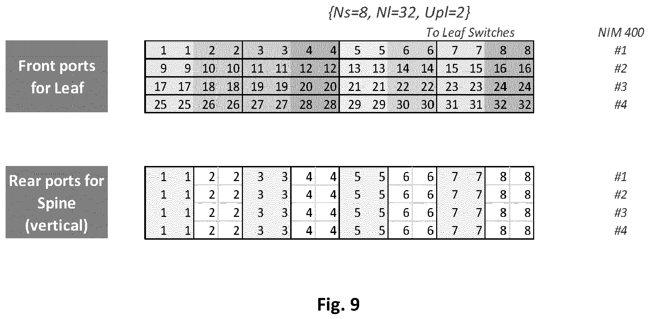

For example, fabric {*Ns*=*8*, *Nl*=*32*, *Upl*=*2*}, can be implemented using only four NIMs 400 as shown in Fig. 9. Enabling a simple way to implement two uplinks significantly facilitates the design of fabrics multiple of six uplinks and in general, enable *Upl* = *2 x (2 x k1*+*k2),* where *k1* and *k2* are positive integers.

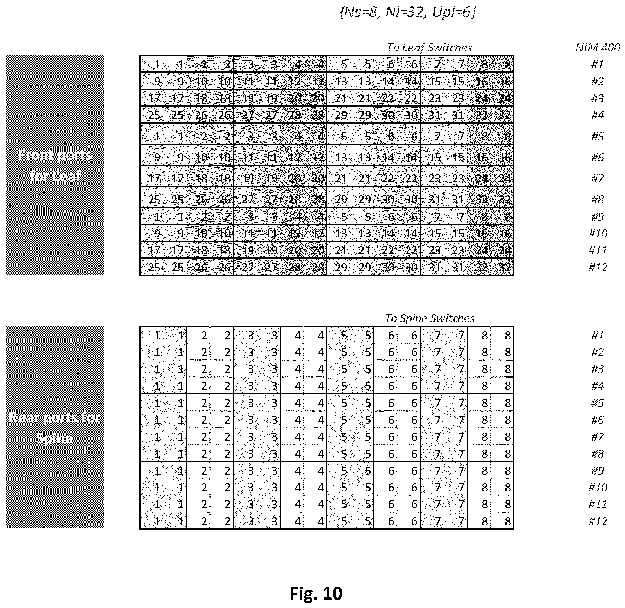

In another example, fabric {*Ns*=*8*, *Nl*=*32*, *Upl*=*6*}, can be implemented using 12 NIMs **400** using a mesh from the **M-FLEX** set as shown in Fig. 10. A view from the front side of the stack shows the parallel ports of each NIM **400,** in groups of two connected to the Leaf switches following a simple sequential (horizontal). The bottom side of the same figure shows a view from the rear side, showing that the Spines connect vertically but in adjacent groups of two. Since three NIMs **400** modules can fit in ~1 RU, this implementation requires approximately 4 RUs.

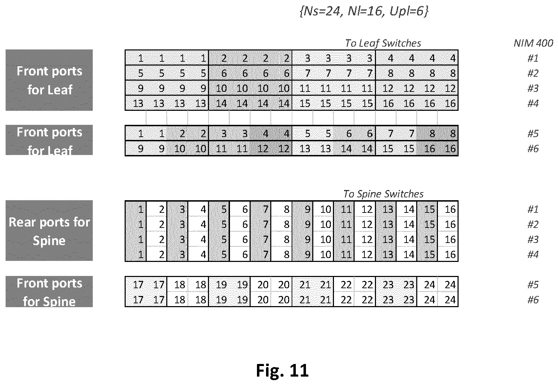

Another example for a fabric {*Ns*=*24*, *Nl*=*16*, *Upl*=*6*}, shown in Fig. 11, can be implemented using 6 NIMs **400** with one mesh from the **M-FLEX** set. A view from the front side of the stack shows the parallel ports of each NIM **400,** in groups of two connected to the Leaf switches following a simple sequential (horizontal). The bottom side of the same figure shows a view from the rear side, showing that the Spines connect vertically but in adjacent groups of two. Since three NIMs **400** modules can fit in ~1 RU, this implementation requires approximately 4 RUs.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

Some examples of the present technology are set out in the following numbered clauses.
Clause 1. An apparatus comprising:
   a plurality of multi-fiber connector adapters, wherein said adapters connect to network equipment in a data communications network; and
   an internal mesh with 128 optical fibers, wherein a light path of connected transmitters and receivers are matched to provide proper optical connections to said transmitting to receiving fibers, wherein the internal mesh is designed to enable at least a two-fiber connection from an arbitrary group of two adjacent parallel ports from one side of the mesh to any group of two adjacent parallel ports at the opposite side of the mesh wherein complex arbitrary network topologies can be implemented with at least 1/N less point to point interconnections, and where N is a number of duplex channels per connector adapters.
Clause 2. The apparatus of clause 1 wherein a plurality of apparatuses can be stacked to provide folded Clos network topology of various radixes.
Clause 3. The apparatus of clause 1 wherein a plurality of apparatuses can be used to scale optical networks from four to thousands of switches.
Clause 4. The apparatus of clause 1 wherein a plurality of apparatuses can be stacked to provide folded Clos network topology for switches using an even number of uplinks where each of said uplinks comprises multi-fiber connectors.
Clause 5. The apparatus of clause 1 wherein a plurality of apparatuses can be used to implement fabrics to connect several hundred thousand servers.
Clause 6. A structured cable system comprising a stack of modules, wherein each module has a plurality of optical parallel connector adapter and incorporate an internal mesh, wherein the internal mesh is designed to enable at least one duplex connection from any two adjacent parallel ports from one side of the mesh to any group of two adjacent parallel ports at the opposite side of the mesh wherein the stack of modules can be used to deploy or scale various Clos network topologies using less number of interconnections.
Clause 7. The structured cabling system of clause 6 wherein said system can be used to scale optical networks from four to ten thousand switches.
Clause 8. The structured cabling system of clause 6 wherein said system can provide redundant paths, reducing the risk of network failure due to interconnection errors.
Clause 9. The structured cabling system of clause 6 wherein said system can enable fabrics with an arbitrarily even number of uplinks.
Clause 10. A fiber optic module apparatus, which comprises, a main body, a front face, a rear side, a left side, and a right side wherein the front face accommodates a multiplicity of multi-fiber connectors, the rear face accommodates a multiplicity of multi-fiber connectors, identical in number to the front face, an internal structure of the module provides space for optical lanes comprising optical fibers or optical waveguides, wherein the internal structure of the module apparatus contains at least 128 optical fibers or optical waveguides, the said the optical fibers or waveguides connect fibers of the front face multi-port fiber connectors to fibers of the rear face multi-port fiber connectors, and where the connections follow an interconnection map that produces a mesh configuration wherein the internal mesh is designed to enable full connection from at least two fibers from two adjacent ports from one side of the mesh to at least two fibers of two adjacent ports from the opposite side of the mesh.

## Claims

1. An apparatus comprising:
a plurality of multi-fiber connector adapters, wherein said adapters connect to network equipment in a data communications network; and include
an internal mesh with a plurality of optical fibers, for providing a light path between transmitters and receivers optically connected to said optical fibers,
wherein the internal mesh is configured to provide at least a two-fiber connection from a first group of adjacent parallel ports at one side of the mesh to a second group of adjacent parallel ports at an opposite side of the mesh,.

2. The apparatus of claim 1 wherein the internal mesh has 128 optical fibers and/or complex arbitrary network topologies are implemented with at least 1/N less point to point interconnections, where N is a number of duplex channels per connector adapter.

3. The apparatus of any preceding claim wherein the apparatus is stackable to provide folded Clos network topology of various radixes.

4. The apparatus of any preceding claim, wherein the apparatus is used to scale optical networks from four to thousands of switches.

5. The apparatus of any preceding claim, wherein the apparatus is stackable to provide folded Clos network topology for switches using an even number of uplinks where each of said uplinks comprises at least one multi-fiber connector.

6. The apparatus of any preceding claim, wherein the apparatus is used to implement fabrics to connect at least one hundred thousand servers.

7. A structured cable system comprising a stack of modules, wherein each module has a plurality of optical parallel connector adapters and incorporates an internal mesh, wherein
the internal mesh is configured to provide at least one duplex connection from a first group of adjacent parallel ports at one side of the mesh to a second group of adjacent parallel ports at the opposite side of the mesh.

8. The structured cable system of claim 7, wherein the stack of modules are used to deploy or scale various Clos network topologies.

9. The structured cabling system of claims 7 or 8, wherein said system is used to scale optical networks from four to ten thousand switches.

10. The structured cabling system of any of claims 7-9, wherein said system provides redundant paths.

11. The structured cabling system of any of claims 7-10, wherein said system is configured to enable fabrics with an arbitrarily even number of uplinks.

12. A fiber optic module apparatus, which comprises, a main body, a front face, a rear side, a left side, and a right side wherein
the front face accommodates a plurality of multi-fiber connectors,
the rear face accommodates a plurality of multi-fiber connectors, identical in number to the front face,
an internal structure of the module provides space for optical lanes comprising optical fibers or optical waveguides, ,
the optical fibers or waveguides connect fibers of the front face multi-port fiber connectors to fibers of the rear face multi-port fiber connectors, and where the connections follow an interconnection map that produces a mesh configuration wherein the internal mesh is configured to provide full connection from at least two fibers from two adjacent ports at one side of the mesh to at least two fibers of two adjacent ports at the opposite side of the mesh.

13. The fiber optic module apparatus of claim 12, wherein the internal structure of the module apparatus contains at least 128 optical fibers or optical waveguides.
